# EUROPEAN PATENT SPECIFICATION

(11) **EP 1 836 251 B1**
(45) Date of publication and mention of the grant of the patent: **09.02.2011**
(21) Application number: 05823177.0
(22) Date of filing: 22.12.2005
(51) Int. Cl.: C08K 5/526, C07F 9/141, C07F 9/145, C08K 3/16, C08K 5/098, C09K 15/32

(54) **STABILIZER COMPOSITION CONTAINING PHOSPHITE ESTERS**
PHOSPHITESTER ENTHALTENDE STABILISATORZUSAMMENSETZUNG
COMPOSITION DE STABILISANT RENFERMANT DES ESTERS DE PHOSPHITE

(30) Priority: 23.12.2004 IT MI20042464
(43) Date of publication of application: 26.09.2007
(73) Proprietor: Baerlocher Italia S.p.A., 26900 Lodi (IT)
(72) Inventor: COMINI, Andrea, I-27100 Pavia (IT); SPINA, Giuseppe, I-20097 San Donato/milano (IT); PELLEGRINI, Emilio, I-20154 Milano (IT); MOEHLMAN, Timothy, I-26900 Lodi (IT)
(74) Representative: Fiesser, Gerold Michael
(86) International application number: PCT/EP2005/013936
(87) International publication number: WO 2006/066947

(56) References cited:
- EP-A- 0 930 332
- WO-A-94/24200
- WO-A-96/15186
- WO-A-2004/087722
- US-A- 5 575 951

## Description

The present invention relates to a phosphite ester containing stabilizer composition for halogen-containing polymers, its production and its use and to a polymer composition containing such a phosphite ester containing stabilizer composition.

As is known, under thermal load during processing or in long term use, halogen-containing plastics tend to undesired degradation and decomposition reactions. In the decomposition of halogenated polymers, in particular with PVC, hydrochloric acid forms, which is eliminated from the polymer strand, resulting in a coloured unsaturated plastic with chromophoric polyene sequences.

The effect is particularly problematic, since halogen-containing polymers only have the rheological properties necessary for processing at a relatively high processing temperature. At such temperatures, however, in unstabilized polymers a notable degradation of the polymer occurs, which leads both to the above-described undesired colour change and to an alteration of the material properties. Furthermore, the hydrochloric acid liberated from the non-stabilized, halogen-containing polymer at such a processing temperature leads to an appreciable corrosion of the processing installation. This process in particular plays a role, if in the processing of halogenated polymers of this type into formed bodies, for example by extrusion, interruption of production occur and the polymer mass remains for a longer period of time in the extruder. During this time, the above degradation reactions can occur, whereby the charge in the extruder becomes unusable, and the extruder can also be damaged. However, also in applications, where the extrusion of the material is not an option, e.g., in plastisol applications, the emission of HCl should be avoided since it can be dangerous for persons working in an environment with HCl emission.

Furthermore, polymers which have been subjected to a degradation of this type tend to form adhesions to the processing installations, which are difficult to remove.

In order to solve the problems mentioned, compounds are generally added to halogen-containing polymers in processing as so-called stabilizers, which should prevent as much as possible the above-mentioned degradation reactions. Often, stabilizers of this type are solids, which are added to the polymer to be processed before its processing.

Several systems are known to stabilize halogen containing polymers In plastisol applications liquid Ba/Cd/Zn, Ba/Zn , organotin and liquid or paste Ca/Zn stabilisers are used. Solid are generally not used due to difficult dispersion in the plastisols. Traditional stabilisers usually contain heavy metals (Ba, Cd, Sn or Zn). They often also contain metal soaps which can affect transparency, and large amounts of solvents which can produce emissions during plastisol gelation (see, e.g., directive 199/13 EC on the limitations of emission of VOC).

These properties of the stabilisers can be important in flooring production. In fact, transparency of the topcoat is often considered to be very important and emission of low boiling point additives can affect the indoor air quality, which is getting more and more important in many contries (several national regulations are in preparation).

In order to be able to stabilize halogen containing polymers, a group of stabilizers, generally known as organically based stabilizers, has been introduced. Such stabilizers can be solid or liquid and often have good stabilizing properties.

EP 0 930 332 A2 relates to a stabilizer system for chlorine containing polymers. Stabilizers containing uracil derivatives and several other substances as co stabilizers are described. Among a plethora of possible additives, also phosphites are mentioned.

WO 94/24200 relates to liquid stabilizer compositions comprising metal soap and solubilized metal Perchlorate. The liquid stabilizer is formed by combining a solubilized metal perchlorate and a liquid mixture of at least one metal soap stabilizer. The use of phosphite esters with alkylether groups is mentioned. However, the described phosphite esters do not sufficiently improve the heat stability of the halogen containing polymers. All these stabiliser formulations contain Barium and /or Zinc, so they cannot be used for plastisol where heavy metals should be avoided..

The present invention had, therefore, the object of making available a stabilizer composition which can be used in the production of halogen-containing polymers and which have at lest the same performance as the tradition liquid mix metals stabilisers but it is free from heavy metals. Furthermore, the present invention had the object of making available a liquid stabilizer composition, which can be used in the production of halogen-containing polymers and which reduces cloudiness in transparent end products, for example of hard or soft PVC. A further object of the invention was to make available a stabilizer composition, which has an improvement of the early colour at elevated temperatures in the processing of halogen-containing polymers, improve heat aging performance and reduce exudation which can appear on the surface of the finished article during storage in comparison to stabilizers known from the prior art.

It has now been found that stabilizer compositions which comprise at least one or more different types of organic phosphite esters, in combination with salts of light metals with carboxilic acid, perchloric, phenate or alkyl phenate as described in the claims and the following detailed description of the invention, solve the above-mentioned objects.

A first subject matter of the present invention is therefore a stabilizer composition, characterised in that it comprises at least one or more different types of organic phosphite esters of the general formula I 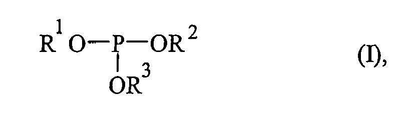 wherein R¹, R² and R³, independently from each other stand for a linear or branched, saturated or unsaturated C₁₋₂₂ alkyl or alkenyl group, a C₄₋₂₂ cycloalkyl or cycloalkenyl group, a C₆₋₂₂ aryl or aralkyl group, an ether group of the general formula II 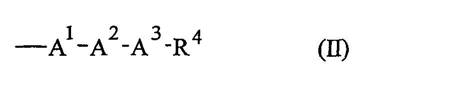 wherein A¹, A² and A³ independently from each other stand for identical or pair wise different or triple different linear or branched, saturated or unsaturated C₂₋₁₈ oxyalkylene groups or C₂₋₁₈ polyoxyalkylene groups and R⁴ stands for a linear or branched, saturated or unsaturated C₁₋₂₂ alkyl or alkenyl group, a C₄₋₂₂ cycloalkyl or cycloalkenyl group, a C₆₋₂₂ aryl or aralkyl or alkaryl group, and wherein at least one organic phosphite ester contains at least one ether group of the general formula II and at least one aralkyl group, wherein the composition comprises an inorganic or organic salt of a halogen containing oxy acid and is free of heavy metals.

By "stabilizer composition" in the scope of the present invention is understood a composition which can be used for stabilizing halogen-containing polymers. To achieve this stabilizing effect, a stabilizer composition according to the invention is, generally, mixed and then processed with a halogen-containing polymer provided for stabilization. It is, however, also possible to mix a stabilizer composition according to the invention into the halogen-containing polymer to be stabilized during the processing.

A stabilizer composition according to the present invention can be in the solid or in the liquid state. By the term "liquid" in the scope of the present invention is understood the physical state of a stabilizer composition according to the invention at least over and within a temperature range of around 45 to around 100°C, e.g., over a temperature range of around 30 to around 120°C, for example over a temperature range of around 15 to around 150°C or over a temperature range of around 0 to around 200°C or over a temperature range of around -20 to around 400 °C.

A stabilizer composition according to the invention comprises at least one or more different types of organic phosphite esters of the general formula I

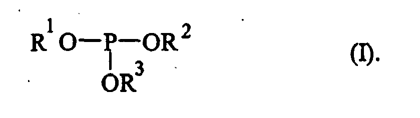

In the general formula I, the radicals R¹, R² and R³, independently from each other, can stand for a linear or branched, saturated or unsaturated C₁₋₂₂ alkyl or alkenyl group, a C₄₋₂₂ cycloalkyl or cycloalkenyl group, a C₆₋₂₂ aryl or aralkyl group.

If a radical R¹, R² or R3 or two or more of these radicals stand for a linear or branched, saturated or unsaturated C₁₋₂₂ alkyl group, it can be preferred, if the alkyl group is a saturated alkyl group. The number of carbon atoms can vary from 1 to 22, however, a number of 2 to 20 or 4 to 18 or 6 to 16 or 8 to 14 or 10 to 12 can be preferred. The number of carbon atoms in the above mentioned case can be an even number, suitable radicals can, however also bear an odd number of carbon atoms, e.g., 3, 5, 7, 9, 11, 13, 15, 17, 19 or 21 carbon atoms. Suitable radicals can be methyl, ethyl, propyl, isopropyl, butyl, isobutyl, pentyl and the branched pentyl radicals, hexyl and the branched hexyl radicals, octyl and the branched octyl radicals, nonyl and the branched nonyl radicals, decyl and the branched decyl radicals, undecyl and the branched undecyl radicals, dodecyl and the branched dodecyl radicals, tridecyl and the branched tridecyl radicals, tetradecyl and the branched tetradecyl radicals, pentadecyl and the branched pentadecyl radicals, hexadecyl and the branched hexadecyl radicals, octadecyl and the branched octadecyl radicals, nonadecyl and the branched nonadecyl radicals and the like.

If a radical R¹, R² or R3 or two or more of these radicals stand for a cyclic group, it can be preferred if at least one or more of the radicals stand for a C₄₋₂₂ cycloalkyl group. The cyclic group can be mono or polycyclic. The cycles can be formed entirely of covalently connected carbon atoms. It is, however, also within the context of the present invention, if the cycles contain one or more covalently bonded hetero atoms, e.g., O, N, P or S. Cyclic radicals which qualify as radicals R¹, R² or R3 can have 4 to 22 or 6 to 20 or 8 to 18 or 10 to 16 or 12 to 14 carbon atoms, the exact number can be even or odd. The number of hetero atoms per radical can vary between 1 and 5 and can, e.g., be 2, 3 or 4.

If a radical R¹, R² or R3 or two or more of these radicals stand for a C₆₋₂₂ aryl or aralkyl group it can be preferred if at least one or more of the radicals stand for an aralkyl group. The term "aralkyl group" in the context of the present invention relates to a radical which contains an aryl ring which is covalently bonded to an O atom which is directly or indirectly bonded to a P atom. The aryl radical is substituted by at least 1 saturated alkyl group with 1 to 22 carbon atoms, however, a number of 2 to 20 or 5 to 15 or 7 to 13 or 8 to 10, e.g., 9, can be preferred. Preferred alkyl radicals can be butyl, isobutyl, pentyl and the branched pentyl radicals, hexyl and the branched hexyl radicals, octyl and the branched octyl radicals, nonyl and the branched nonyl radicals, decyl and the branched decyl radicals, undecyl and the branched undecyl radicals, dodecyl and the branched dodecyl radicals and the like, especially nonyl and the branched nonyl radicals.

A radical R¹, R² or R3 or two or more of these radicals can stand for an ether group of the general formula II

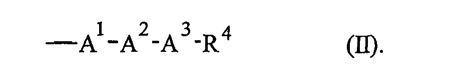

In this formula, A¹, A² and A³ independently from each other stand for identical or pair wise different or triple different linear or branched, saturated or unsaturated C₂₋₁₈ oxyalkylene groups or C₁₋₁₈ polyoxyalkylene groups. The term "pair wise different" in the context of the present invention relates to the possibility that either A¹ and A² are identical and A³ is different or A² and A³ are identical and A¹ is different. The term "triple different" describes the situation where A¹, A² and A³ are different.

All radicals A¹, A² and A³ independently from each other can stand for a single oxyalkylene unit, e.g., -O-CH₂-CH₂ or -O-CH(CH₃)-CH₂ or -O-CH₂-CH(CH₃), or to two successive identical or different oxyalkylene units (poly oxyalkylene units), e.g., -O-CH₂-CH₂-O-CH₂-CH₂ or -O-CH₂-CH₂-O-CH(CH₃)-CH₂ or -O-CH₂-CH₂-O-CH₂-CH(CH₃) and the like. It is, however, also possible that A¹, A² and A³ independently from each other can stand for a poly oxyalkylene unit with three or more identical or different successive oxyalkylene units. In the latter case, A¹ can, for example, stand for -EO-EO-EO-... or PO-PO-PO-... or EO-PO-EO-PO-..... or EO-PO-PO-EO-PO-EO-PO-PO-... and the like, wherein EO stands for an oxyethylene radixal and PO stands for a oxypropylene radical. Thus, any radical R¹, R² and R³ can stand for a monofunctional ether alcohol with a wide range of different molecular weights and chemical compositions if A¹, A² and A³ are chosen accordingly.

R⁴ in formula II stands for a linear or branched, saturated or unsaturated C₁₋₂₂ alkyl or alkenyl group, a C₄₋₂₂ cycloalkyl or cycloalkenyl group, a C₆₋₂₂ aryl or aralkyl group. In a preferred embodiment the alkyl group is a saturated alkyl group. The number of carbon atoms can vary from 1 to 22, however, a number of 2 to 15 or 3 to 13 or 4 to 10 can be preferred. Suitable radicals can be methyl, ethyl, propyl, isopropyl, butyl, isobutyl, pentyl and the branched pentyl radicals, hexyl and the branched hexyl radicals, octyl and the branched octyl radicals or nonyl and the branched nonyl radicals. As a radical R⁴, ethyl, propyl or butyl are most preferred.

It has proven to be advantageous, if a phosphiteester in a composition according to the invention carries a radical according to the formula II which is of limited molecular weight, e.g., at or below 1000 units or at or below 800 units or at or below 500 units. In a further embodiment according to the present invention, a radical according to formula II comprises a maximum of about 8, or a maximum of about 7 or a maximum of about 6 or a maximum of about 5 or a maximum of about 4 or a maximum of about 3 or a maximum of about 2 identical or different oxyalkylene units.

It can further be preferred, if the number of carbon atoms in the radical R⁴ is at least equal to or greater than the number of carbon atoms in each oxyalkylene unit in a radical A¹, A² and A³.

In a further preferred embodiment, a radical according to formula 4 comprises 2 or 3 identical or different oxyalkylene units, e.g., two EO units or two PO units or three EO units or three PO units or units containing EO and PO in varying amounts. It can also contain oxyalkylene units with more than two or three carbon atoms, e.g., oxybutylene or oxypentylene units. It has proven to be successful, if butyldiglycol is used as a radical R¹, R² or R³.

In a composition according to the present invention at least one phosphiteester is present which contains at least one ether group of the general formula II and at least one aralkyl group. Thus, a composition according to the present invention contains at least one phosphite ester of the general formula I in which at least one of R¹, R² or R³ stands for a radical according to the general formula II and at least one of the remaining R¹, R² or R³ stands for a C₆₋₂₂ aralkyl group. It is also within the scope of the present invention that non stochiometrical mixtures of phosphiteesters of the general formula I are employed, in which the number of radicals according to the general formula II is not a natural number. If, e.g., a mixture of phosphiteesters according to the general formula I, in which R¹ and R² stand for a radical according to the general formula II and R3 stands for a C₆₋₂₂ aralkyl group for 50 % of the molecules and in which R¹ and R² stand for a C₆₋₂₂ aralkyl group and R3 stands for a radical according to the general formula II for the other 50 % of the molecules, the average number of radicals according to the formula II is 1.5.

It is, however, preferred according to the present invention, if a mixture of phosphiteesters is employed in which the average number of radicals according to the formula II is greater than 1.5, e.g., greater than 1.6 or greater than 1.7 or greater than 1.8 or greater than 1.9 or in the range of about 2, i.e., between about 1.91 and 2.0.

In a further embodiment of the invention, a stabilizer composition contains at least two phosphite esters according to the general formula I which differ in at least one of the radicals R¹, R² or R³, wherein both phosphites contain at least one aryl or aralkyl radical.

It has proven to be advantageous in some situations if a composition according to the present invention contains a polyphosphite ester. The term "polyphosphite ester" relates to an ester which contains two or more, e.g., three, four or five, phosphite groups. It is preferred if polyphosphate esters according to the general formula III 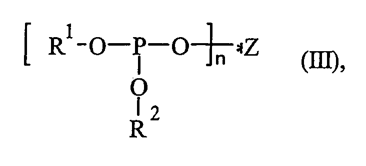 wherein R¹ and R² have the meaning already explained above and wherein Z stands for a radical with a valency of n, which can assume a value of 2 to about 20 but is preferably 2, 3, 4 or 5.

In a further embodiment of the present invention, a stabilizer composition can contain a polyphosphite ester according to the general formula IIIa 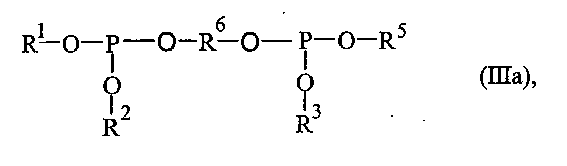 in which R¹, R² and R³ have the meaning as defined above, R⁵ is defined as R¹, R² and R³ and R⁶ stands for the remainder of a polyol with two or more hydroxy groups. Radicals R⁶ can be derived from polyols like ethylene glycol, propylene glycol, butylenes glycol, diethylene glycol, dipropylene glycol, mixed alkylene glycols with 2 to 100 oxyalkylene units with 2 to 5 carbon atoms like polyethylene oxide, polypropylene oxide or polytetrahydrofurane, pentaerythritol, trimethylolpropane, polyvinylalcohol, tris-(hydroxymethyl)isocyanurate, tetramethylolcyclohexanol, tetramethylolcyclopentanol, tetramethylolcycloheptanol, glycerine or diglycerin, polyglycerin.

In a further embodiment of the present invention, a composition according to the present invention can contain a phosphite ester according to the formula IIIa, in which R⁶ is derived from pentaerythritol and the radicals R¹, R², R³ and R⁵ stand for a linear or branched, preferably linear hydrocarbyl radical with 6 to 12 carbon atoms, preferably with 8 to 10 carbon atoms, e.g., decyl radicals.

A stabilizer composition according to the present invention contains phosphite esters as described above in an amount of about 5 to about 95 % by weight, based on the complete stabilizer composition. It is generally preferred, if the amount of phosphite esters as described above is above about 50 % by weight, or above about 60% by weight or above about 70 % by weight.

If a stabilizer composition according to the present invention contains an organic phosphite ester or two or more organic phosphite esters of the general formula I which contain at least one ether group of the general formula II and at least one aralkyl group, such phosphite esters are present in an amount of at least 10 % by weight based on the complete stabilizer composition. If a stabilizer composition according to the present invention contains an organic phosphite ester or two or more organic phosphite esters of the general formula I which contain at least one ether group of the general formula II and at least one aralkyl group and a second phosphite ester or which contains no ether group of the general formula II or a polyphosphite ester, the weight ratio of the two types of phosphite esters in a stabilizer composition can be about 100:1 to about 1:100, e.g., about 10:1 to about 1:10 or about 8:1 to about 1:8 or about 5:1 to about 1:5 or about 3:1 to about 1:3 or about 2:1 to about 1:2 or about 1:1.

If a stabilizer composition according to the present invention contains an organic phosphite ester or two or more organic phosphite esters of the general formula I which contain no ether group of the general formula II and at least one aralkyl group, such phosphite esters are present in an amount of at least 10 % by weight based on the complete stabilizer composition. If a stabilizer composition according to the present invention contains an organic phosphite ester or two or more organic phosphite esters of the general formula I which contain no ether group of the general formula II and at least one aralkyl group and a second phosphite ester or two or more phosphite esters or poly phosphite esters which contain no ether group of the general formula II, the weight ratio of the two types of phosphite esters in such a stabilizer composition can be about 100:1 to about 1:100, e.g., about 10:1 to about 1:10 or about 8:1 to about 1:8 or about 5:1 to about 1:5 or about 3:1 to about 1:3 or about 2:1 to about 1:2 or about 1:1.

It can be preferred, if a stabilizer composition according to the present invention contains less than 30 % by weight of phosphite esters with 3 or more aryl or aralkyl groups or a mixture of both.

In a further embodiment of the invention, a stabilizer composition contains at least two phosphite esters according to the general formula I which differ in at least one of the radicals R¹, R² or R³, wherein both phosphites contain at least one aryl or aralkyl radical.

A stabilizer composition according to the present invention can contain one or more additives. Suitable additives can be selected from the group consisting of inorganic or organic salts of a halogen containing oxy acid, solvents, aminouracil compounds, acid scavengers, fillers, metal soaps, mono alcohols, poly alcohols or amines or mixtures of two or more of described compounds, but are not limited to this list. Generally, any additive which does not exhibit a more than acceptable detrimental influence on the properties of the stabilizer composition can be part of it. It is, however, preferred, if a stabilizer composition according to the invention contains additives which have a positive influence on the performance of the composition.

As an additive, a stabilizer composition according to the present invention can contain other organic phosphite esters with 1 to 3 identical, pair wise identical or different organic residues. Suitable organic residues are, e.g. linear or branched, saturated or unsaturated alkyl residues with 1 to 24 C-atoms, optionally substituted alkyl residues with 6 to 20 C-atoms or optionally substituted aralkyl residues with 7 to 20 C-atoms. Examples of suitable organic phosphite esters are trilauryl-, tributyl-, trioctyl-, tridecyl-, tridodecyl-, triphenyl-, octyldiphenyl-, dioctylphenyl-, tri-(octylphenyl)-, tribenzyl-, butyldicresyl-, octyl-di(octylphenyl)-, tris-(2-ethylhexyl)-, tritolyl-, tris-(2-cyclohexylphenyl)-, tri-α-naphthyl-, tris-(phenylphenyl)-, tris-(2-phenylethyl)-, tris-(dimethylphenyl)-, tricresyl- or tris-(p-nonylphenyl)-phosphite, triphenylphosphite, diphenyl decyl phosphite, didecyl phenyl phosphite or tristearyl-sorbit-triphosphite or tetra dodecyl dipropyleneglycol diphosphite or Tetradecyl pentaerythritol diphosphite, tetradodecyl pentaerythritol diphosphite or mixtures of two or more thereof.

A stabilizer composition according to the invention can comprise the described additional phosphite compounds in a quantity of up to around 30 wt.-% in particular up to around 10 wt.%, based on the weight of the complete stabilizer composition.

A composition according to the present invention can furthermore contain one or more perchlorates, which can be organic or inorganic, as an additive.

Suitable organic perchlorates are, e.g., onium perchlorates. An onium perchlorate applicable in the scope of the present invention has at least one positively charged N, P or S atom or two or more of such positively charged N, P or S atoms or mixtures of two or more of the mentioned, positively charged atom types.

In the scope of the present invention, as onium perchlorate are used compounds which bear at the N, S or P atom at least one organic residue and at most the highest possible number of organic residues. If an onium perchlorate applicable according to the invention bears fewer organic residues than are necessary to form a positively charged onium ion, the positive charge is achieved by common means known to the skilled person via protonation by means of a suitable acid, so that the corresponding onium perchlorate in this case bears, in addition to an organic residue, at least one proton.

Thus according to the invention compounds can be used as onium perchlorates which by reason of protonation reactions have a positive charge. It is, however, likewise possible in the scope of the stabilizer combinations according to the invention to use onium perchlorates, which by reason of a peralkylation reaction have a positive charge. Examples of compounds of this type are tetraalkylammonium, trialkylsulfonium or tetraalkylphosphonium perchlorates. It is, however, likewise provided in the scope of the present invention that a peralkylated onium perchlorate applicable according to the invention has an aryl, alkaryl, cycloalkyl, alkenyl, alkynyl or cycloalkenyl residue. It is, according to the invention, likewise possible and provided, that an onium salt applicable in the framework of a stabilizer composition according to the invention has two or optionally more different substituent types, for example an alkyl and a cycloalkyl residue or an alkyl and an aryl residue.

It is also, in the scope of the present invention, possible and provided that an onium salt which can be used in the stabilizer composition according to the invention has substituents which are in turn substituted by one or more functional groups. As "functional groups" are indicated groups which improve the effects of the stabilizer composition or at least do not or only insubstantially worsen them. Corresponding functional groups can be, for example, NH groups, NH₂ groups, OH groups, SH groups, ester groups, ether groups, thioether groups, isocyanurate groups or keto groups or mixtures of two or more thereof.

As phosphonium perchlorate, in the scope of the present invention in principle all compounds can be used which lead by corresponding conversion of suitable reactants to a phosphonium perchlorate. Thus phosphonium perchlorates which can be used according to the invention are obtained for example by corresponding conversion of tetraalkyl-, tetracycloalkyl-, or tetraallylphosphorus halides. Suitable phosphonium perchlorates are derived, therefore, for example from tetraalkylphosphorus salts such as tetra-n-ethylphosphoniumbromide, tetra-n-propylphosphoniumbromide, tetra-n-butylphosphoniumbromide, tetra-n-isobutylphosphoniumbromide, tetra-n-pentylphosphoniumbromide, tetra-n-hexylphosphoniumbromide and tetraalkylphosphorus salts of this type.

As sulfonium perchlorates, in the scope of the present invention, in principle all compounds are useable which, by means of corresponding conversion of suitable reagents, lead to a sulfonium perchlorate. Thus useable sulfonium perchlorates according to the invention can, for example, be obtained by corresponding conversion of sulfides such as alkylmonosulfides, alkyldisulfides, dialkylsulfides or polyalkylsulfides. Suitable sulfonium perchlorates are thus derived, for example, from dialkylsulfides such as ethylbenzylsulfides, allylbenzylsulfides or alkyldisulfides such as hexanedisulfides, heptanedisulfides, octanedisulfides and alkyldisulfides of this type.

As ammonium perchlorates in principle all compounds are useable which by corresponding conversion of suitable reagents lead to an ammonium perchlorate. Thus useable ammonium perchlorates according to the invention can, e.g., be obtained by corresponding conversion from amines or amides such as alkylmonoamines, alkylenediamines, alkylpolyamines, secondary or tertiary amines or dialkylamines. Suitable ammonium perchlorates are thus derived, e.g., from primary mono- or polyamino compounds with 2 to approximately 40, e.g. 6 to approximately 20 C-atoms. These are, e.g. ethylamine, n-propylamine, i-propylamine, n-butylamine, sec.-butylamine, tert.-butylamine, substituted amines with 2 to approximately 20 C-atoms such as 2-(N,N-dimethylamino)-1-aminoethane. Suitable diamines have, e.g., 2 primary, 2 secondary, 2 tertiary or one primary and one secondary or one primary and one tertiary or one secondary and one tertiary amino group. Examples thereof are diaminoethane, isomers of diaminopropane, the isomers diaminobutane, the isomers diaminohexane, piperazine, 2,5-dimethylpiperazine, amino-3-aminomethyl-3,5,5-trimethylcycohexane (isophoronediamine, IPDA), 4,4'-diaminodicyclohexylmethane, 1,4-diaminocyclohexane, aminoethylethanolamine, hydrazine, hydrazine hydrate or triamines such as diethylenetriamine or 1,8-diamino-4-aminomethyloctane or tertiary amines such as triethylamine, tributylamine, dimethylbenzylamine, N-ethyl-, N-methyl-, N-cyclohexylmorpholine, dimethylcyclohexylamine, dimorpholinodiethylether, 1,4-diazabicyclo[2,2,2]octane, 1-azabicyclo[3,3,0]octane, N,N,N',N'-tetramethylethylenediamine, N,N,N',N'-tetramethylbutanediamine, N,N,N',N'-tetramethylhexanediamine-1,6, pentamethyldiethylenetriamine, tetramethyldiaminoethylether, bis-(dimethylaminopropyl)-urea, N,N'-dimethylpiperazine, 1,2-dimethylimidazole or di-(4-N,N-dimethylaminocyclohexyl)-methane.

Likewise suitable are aliphatic aminoalcohols with 2 to approximately 40, preferably 6 to approximately 20 C-atoms, e.g. triethanolamine, tripropanolamine, tributanolamine, tripentanolamine, 1-amino-3,3-dimethyl-pentan-5-ol, 2-aminohexan-2',2"-diethanolamine, 1-amino-2,5-dimethylcyclohexan-4-ol, 2-aminopropanol, 2-aminobutanol, 3-aminopropanol, 1-amino-2-propanol, 2-amino-2-methyl-1-propanol, 5-aminopentanol, 3-aminomethyl-3,5,5-trimethylcyclohexanol, 1-amino-1-cyclopentane-methanol, 2-amino-2-ethyl-1,3-propandiol, 2-(dimethylaminoethoxy)-ethanol, aromatic-aliphatic or aromatic-cycloaliphatic aminoalcohols with 6 to around 20 C-atoms, wherein as aromatic structures, heterocyclic or isocyclic ring systems such as naphthalene derivatives or in particular benzene derivatives such as 2-aminobenzylalcohol, 3-(hydroxymethyl)aniline, 2-amino-3-phenyl-1-propanol, 2-amino-1-phenylethanol, 2-phenylglycinol or 2-amino-1-phenyl-1,3-propandiol as well a mixtures of two or more of such compounds, are used.

In the scope of a further embodiment of the present invention, as ammonium perchlorate, the perchlorates of heterocyclic compounds are used, which have available a cyclic ring system comprising amino groups.

E.g., the perchlorates of heterocyclic amino alcohols are used, which comprise at least 2, preferably at least 3 amino groups in the ring. As central ring component of the ammonium perchlorates useable according to the invention, particularly suitable are the trimerisation products of isocyanates.

Thus e.g. suitable hydroxyl group-containing isocyanurates are of the general formula IV 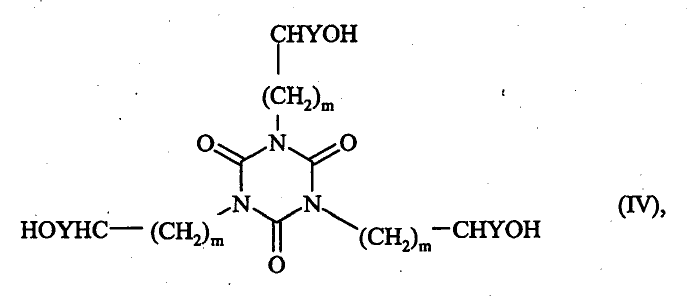 whereby the groups Y and the indices m are respectively the same or different and m stands for a whole number from 0 to 20 and Y for a hydrogen atom or a linear or branched, saturated or unsaturated alkyl group with one to approximately 10 C-atoms. Particularly preferred according to the present invention is the use of tris(hydroxymethyl)isocyanurate (THEIC) as a component of the stabilizer composition according to the invention.

Likewise suitable as ammonium perchlorate are, e.g., compounds in which the amino group is present bound to a substituted aromatic or heteroaromatic system, e.g., aminobenzoic acid, aminosalicylic acid or aminopyridinecarboxylic acid and suitable derivatives thereof.

In the scope of a preferred embodiment of the present invention, as ammonium perchlorate, 2-ethylcarboxypyridinium perchlorate, formamidinium perchlorate, tetra-n-butylphosphonium perchlorate, trimethylsulfoxonium perchlorate, the perchlorate salt of trishydroxyethylisocyanurate, the perchlorate salt of 2-(diethylamino)-ethanol, N-(2-hydroxyethyl)-morpholinium perchlorate or trioctylammonium perchlorate or mixtures of two or more thereof are used.

A stabilizer composition according to the invention can, in the scope of the present invention, e.g. comprise only one of the above-mentioned onium perchlorates. It is, in the scope of the present invention, likewise possible and also provided, that a stabilizer composition according to the invention comprises a mixture of two or more of the above-mentioned onium perchlorates. These can be a mixture of two or more different types of onium perchlorates, i.e., for example a mixture of ammonium perchlorates and sulfonium perchlorates or ammonium perchlorates and phosphonium perchlorates or sulfonium perchlorates and phosphonium perchlorates or ammonium perchlorates and sulfonium perchlorates and phosphonium perchlorates. It is in the scope of the invention also possible that a stabilizer composition according to the invention comprises a mixture of two or more onium perchlorates of a type, i.e. a mixture of two or more ammonium perchlorates and a mixture of two or more sulfonium perchlorates and a mixture of two or more phosphonium perchlorates.

A stabilizer composition according to the invention can, instead of or additionally to organic perchlorates, contain inorganic perchlorates, i.e., the metal salts of perchloric acid. Suitable salts are, e.g., the alkaline salts of perchloric acid like sodium perchlorate or potassium perchlorate. Also perchloraes of other alkaline or earth alkaline metals can be used, e.g., Ba, Ca, Mg, Li etc).

A stabilizer composition according to the invention can comprise, based on the total composition, 0.01 to approximately 30 wt.%, e.g. approximately 0.1 to approximately 20 wt.-% of an organic onium salt of a perchlorate or of a mixture of two or more organic onium salts of perchlorates or of an inorganic perchlorate or of a mixture of two or more inorganic perchlorates or of a mixture of one or more organic perchlorates and one or more inorganic perchlorates.

A stabilizer composition according to the invention can comprise an organic solvent or a mixture of two or more organic solvents.

By a "solvent" is understood, in the scope of the present invention, a compound or a mixture of two or more compounds which within a given temperature range is liquid and therefore in a position to at least partially dissolve one or more compounds present in a composition according to the invention. A suitable solvent in the scope of the present invention is liquid at least over a temperature range from approximately 45 to approximately 100°C, preferably over a temperature range from approximately 30 to approximately 120 °C, e.g. over a temperature range of approximately 15 to approximately 150 °C and in particular over a temperature range of approximately 0 to approximately 200 °C or -20 to 400 °C. Solvents ,having a boiling point which is higher than the temperature of the plastisol processing, are preferred.

In the scope of a preferred embodiment of the present invention as solvent are used compounds or mixtures of two or more compounds which are suitable as softeners for halogen-containing polymers:

As solvent in the sense of the present text are thus suitable, e.g. compounds from the group of phthalic acid esters such as dimethyl-, diethyl-, dibutyl-, dihexyl-, di-2-ethylhexyl-, di-n-octyl-, di-iso-octyl-, di-iso-nonyl-, di-iso-decyl-, dicyclohexyl-, dimethylcyclohexyl-, dimethylglycol-, dibutylglycol-, benzylbutyl- or diphenylphthalate as well as mixtures of phthalates, e.g. mixtures of alkylphthalates with 7 to 9 or 9 to 11 C-atoms in the ester alcohol or mixtures of alkylphthalates with 6 to 10 and 8 to 10 C-atoms in the ester alcohol. Particularly suitable in the sense of the present invention are thus dibutyl-, dihexyl-, di-2-ethylhexyl-, di-n-octyl-, di-iso-octyl-, di-iso-nonyl-, di-iso-decyl-, di-iso-tridecyl- and benzylbutylphthalate as well as the mentioned mixtures of alkylphthalates.

Further suited as solvents are the esters of aliphatic dicarboxylic acids, in particular the esters of adipinic, azelaic or sebacic acid or mixtures of two or more thereof. Examples of solvents of this type are di-2-ethylhexyladipate, di-isooctyladipate, di-iso-nonyladipate, di-iso-decyladipate, benzylbutyladipate, benzyloctyladipate, di-2-ethylhexylazelate, di-2-ethylhexylsebacate and di-iso-decylsebacate. Preferred in the scope of a further embodiment of the present invention are di-2-ethylhexylacetate and di-iso-octyladipate.

Likewise suitable as solvent are trimellitic acid esters, such as tri-2-ethylhexyl-trimellitate, tri-iso-tridecyltrimellitate, tri-iso-octyltrimellitate as well as trimellitic acid esters with 6 to 8, 6 to 10, 7 to 9 or 9 to 11 C-atoms in the ester groups or mixtures of two or more of the compounds mentioned.

Also useful as solvents in the context of the present invention are diols such as 1,2-propanediol, 1,3-butanediol, 1,4-butandiol, 1,6-hexanediol, neopentylglycol, diethyleneglycol dipropyleneglycol, butyldiglycol, polyethylenglycols, polypropyleneglycols or mixtures of two or more thereof.

Further suitable solvents are, e.g. polymer softeners, as given in "Kunststoffadditive", R. Gächter/H. Müller, Carl Hanser Verlag, 3rd Edition, 1989, chapter 5.9.6, pages 342-489, or "PVC Technology", W. V. Titow, 4th Edition, Elsevier Publishers, 1984, pages 165-170. Reference is hereby explicitly made to the named publications and to the softeners named in the scope of the first named source of information (R. Gächter/H. Müller) and suitable as solvents in the sense according to the invention, in particular the compounds mentioned in tables 9a (pages 388 to 392), 10 (page 396), 11 (page 400), 12a (pages 402 to 404), 13a (pages 408 to 410), 13b (page 412), 14 (page 413), 16 (page 418), 3(page 479) and 4 (pages 486 to 488), are considered as part of the disclosure of the present text.

Also suited as solvents are monofunctional alcohols with 2 to 26 carbon atoms. Typical examples are capron alcohol, capryl alcohol, 2-ethyl hexyl alcohol, caprin alcohol, lauryl alcohol, isotridecyl alcohol, myristic alcohol, cetyl alcohol, palm oil alcohol, stearyl alcohol, isostearyl alcohol, oleyl alcohol, elaidyl alcohol, petroselinyl alcohol, linoleyl alcohol, elaeostearyl alcohol, arachic alcohol, gadoleic alcohol, behenyl alcohol, erucyl alcohol und brassidyl alcohol and mixtures of two or more thereof.

Also suited as solvent in the scope of the present invention are the following listed compounds: 2-hydroxy-5-methyl-benzoic acid methylester, 2-ethoxybenzyl alcohol, N-ethyl-2,3-dimethylaniline, 2-Hydroxy-3-methyl-benzoic acid methylester, lauric acid benzylester, 3,4,5-trimethoxybenzyl alcohol, 3,5-dimethylbenzyl alcohol, 3-methylbenzophenone, 2-methoxyactetophenone, 3-cyclohexylpropionic acid, cyclopentanecarboxylic acid, 2,5-dimethylbenzonitrile, 4-(4-methoxyphenyl)-butan-2-one, formic acid cinnamic ester, triethylcitrate, decanedioic acid dibutylester, heptaethyleneglycol decanedioic acid diethylester, adipinic acid dibutylester, 1,2-bis(2-acetoxy-ethoxy)-ethane, azelaic acid diethylester, octanedioic acid diethylester, glutaric acid diethylester, myristinic acid ethylester, oxalic acid dibutylester, 9-decenylpropionate, lauric acid methylester, acetic acid decylester, cyanoacetic acid butylester, hexanoic acid pentylester, acetic acid nonylester, decanoic acid methylester, nonanoic acid methylester, undecylenealcohol, N-methyldioctylamine, Diethylenglycoldibutylether; Dioctylether, decan-3-one, 4-oxa-heptanedinitrile, nonanenitrile, diethyleneglycolmonohexylether, diisobutylketone, formic acid butylester, n-tridecylalcohol, butylcarbitol, glutaric acid dinitrile, propionic acid methylester, thioformic acid dimethylamide, octamethylenedimercaptan, 2-ethylhexan-1,3-diol, decan-4-ol, decan-1-thiol, hexamethylenedimercaptan, trimethylene iodide, dodecan-2-ol, N-butylformamide, diisopentylsulfide, hexaethyleneglycol, pentaethyleneglycol, trioctylamine, dipropylenetriamine, triethyleneglycol, dodecylmercaptan, 2,2'-dithiodiglycol, diethylcarbonate, m-tolylisothiocyanate, linolenic acid, triethylentetraamine, 5H-furan-2-one, 4-benzylpiperidine, 1-phenylpiperidine, isonicotinic acid ethyl ester, pyridine-2-carboxylic acid ethyl ester, 2,3,3-trimethyl-3H-indole, 3-methylsulfolan, propylene carbonate, 3-piperidinopropionitril, sulfolane, tetrahydrothiophene-1-oxide, 4-morpholinoethanol or 4-octylanilin.

The above-mentioned solvents can be present in a stabilizer composition according to the invention respectively alone or as a mixture of two or more thereof. If a stabilizer composition according to the invention is a liquid stabilizer composition which comprises two or more of the above-mentioned compounds as solvent, one of the compounds or several of the compounds can lie outside the above-mentioned definition of the term "liquid", as long as the total solvent mixture lies within this definition.

A stabilizer composition according to the invention can comprise a solvent or a solvent mixture in a quantity of approximately 0 to approximately 50 wt.-%, e.g. approximately 0,1 to approximately 5 or approximately 0,5. to approximately 10 wt.-%. The solvent content can vary within a broad limit, depending on whether the stabilizer composition according to the invention is used as sole stabilizer or together with one or more additives or should be present in a solid or liquid state.

As further additive are suited e.g. compounds which have a mercapto-functional sp²-hybridised C-atom, carbazoles, carbazole derivatives or 2,4-pyrrolidinedione or 2,4-pyrrolidinedione-derivatives.

Likewise suitable as additive are e.g. epoxy compounds. Examples of epoxy compounds of this type are epoxidised soja oil, epoxidised olive oil, epoxidised linsed oil, epoxidised castor oil, epoxidised peanut oil, epoxidised maize oil, epoxidised cottonsed oil, octylepoxystearate as well as glycidyl compounds.

Particularly suitable epoxy compounds are e.g. described in EP-A 1 046 668 on pages 3 to 5, wherein reference is explicitly made to the therein-contained disclosure and this is considered as a part of the disclosure of the present text.

Further suited as additives in the scope of the present invention are 1,3-dicarbonyl compounds, in particular β-diketones and β-ketoesters. In the scope of the present invention are suitable dicarbonyl compounds of general formula R'C(O)CHR"-C(O)R"', as, e.g., described on p. 5 of EP-A 1 046 668, which are explicitly referred to, in particular with respect to the residues R', R" and R'" and the disclosure of which is considered as a part of the disclosure of the present text. Particularly suitable are thus e.g. acetylacetone, butanoylacetone, heptanoylacetone, stearoylacetone, palmitoylacetone, lauroylacetone, 7-tert-nonylthioheptanedione-2,4, benzoylacetone, dibenzoylmethane, lauroylbenzoylmethane, palmitoylbenzoylmethane, stearoylbenzoylmethane, isooctylbenzoylmethane, 5-hydroxycapronylbenzoylmethane, tribenzoylmethane, bis(4-methylbenzoyl)methane, benzoyl-p-chlorobenzoylmethane, bis(2-hydroxybenzoyl)methane, 4-methoxybenzoylbenzoylmethane, bis(4-methoxybenzoyl)methane, benzoylformylmethane, benzoylacetylphenylmethane, 1-benzoyl-1-acetylnonane, stearoyl-4-methoxybenzoylmethane, bis(4-tert-butylbenzoyl)methane, benzoylphenylacetylmethane, bis(cyclohexanoyl)methane, dipivaloylmethane, 2-acetylcyclopentanone, 2-benzoylcyclopentanone, diacetic acid methyl-, ethyl-, butyl-, 2-ethylhexyl-, dodecyl- or octadecylester as well as propionyl- or butyrylacetic acid esters with 1 to 18 C-atoms as well as stearoylacetic acid ethyl-, propyl-, butyl-, hexyl- or octylester or polynuclear β-ketoesters as described in EP-A 433 230, to which reference is made explicitly, or dehydroacetic acids such as magnesium- or alkali salts of the alkali, alkaline earth chelates of the named compounds, provided that these exist and or, in the stabilizer compositions according to the invention, soluble or miscible with these to achieve the above-mentioned results.

1,3-diketo-compounds can be contained in a stabilizer composition according to the invention in a quantity of up to about 20 wt.-%, e.g. up to about 10 wt.-% or up to about 3%.

Further suited as additives in the scope of the stabilizer composition of the present invention are polyols. Suitable polyols are e.g. pentaerythritol, dipentaerythritol, tripentaerythritol, bistrimethylolpropan, inositol, polyvinylalcohol, bistrimethylolethan, trimethylolpropan, sorbite, maltitol, isomaltitol, lactitol, lycasine, mannitol, lactose, leucrose, tris-(hydroxymethyl)isocyanurate, palatinite, tetramethylolcyclohexanol, tetramethylolcyclopentanol, tetramethylolcycloheptanol, glycerine, diglycerine, polyglycerine, thiodiglycerine or 1-0-α-D-glycopyranosyl-D-mannitol-dihydrate.

Further suited as additives in the scope of the stabilizer composition of the present invention are antioxidants. Suitable antioxidants are butylhydroxytoluene ( BHT) , bisphenol A, nonylphenol, Benzene propanoic acid, 3,5-bis (1,1-dimethyl-ethyl) -4-hydroxy-, octadecylester.

The polyols suitable as additives can be included in a stabilizer composition according to the invention in a quantity of up to around 30 wt.-%, e.g. up to around 10 wt.-%.

Likewise suitable as additives are, e.g., sterically hindered amines as mentioned in EP-A 1 046 668 on pages 7 to 27. Reference is explicitly made to the therein-disclosed sterically hindered amines, the therein-mentioned compounds are considered as a part of the disclosure of the present text.

These sterically hindered amines suitable as additives can be included in a stabilizer composition according to the invention in a quantity of up to around 30 wt.-%, e.g., up to around 10 wt.-%.

A stabilizer composition according to the invention can further comprise lubricants ("Gleitmittel") such as montanwax, fatty acids, fatty acid esters, purified or hydrated natural or synthetic triglycerides or partial esters, polyethylene waxes, amide waxes, chloroparaffins, glycerine esters or alkaline earth soaps, provided that these lubricants do not fall under the term "solvent" in the sense of the present text. Lubricants which can be used as additives are further described also in "Kunststoffadditive", R. Gächter/H. Müller, Carl Hanser Verlag, 3rd edition, 1989, p. 478-488. Further suited as additives are, e.g., fatty ketones as are described in DE 42 04 887 as well as lubricants based on silicon, as e.g. named in EP-A 0 259 783, or combinations thereof, as are mentioned in EP-A 0 259 783. Reference is hereby made explicitly to the mentioned documents, whose disclosure concerning lubricants is considered as part of the disclosure of the present text.

A stabilizer composition according to the invention can comprise the described lubricants in a quantity of up to around 70 wt.-%, in particular up to around 40 wt.-% or up to around 20% or up to around 10 % or to up 5%.

Likewise suitable as additives for stabilizer compositions according to the present invention are organic softeners, provided that these softeners do not already fall under the term "solvent" in the sense of the present text.

As corresponding softeners are suitable, e.g., the compounds mentioned in the scope of the description of the solvent from the group of phthalic acid esters such as dimethyl-, diethyl-, dibutyl-, dihexyl-, di-2-ethylhexyl-, di-n-octyl-, di-iso-octyl-, di-iso-nonyl-, di-iso-decyl-, dicyclohexyl-, di-methylcyclohexyl-, dimethylglycol-, dibutylglycol-, benzylbutyl- or diphenylphthalate as well as mixtures of phthalates, e.g. mixtures of alkylphthalates with 7 to 9 or 9 to 11 C-atoms in the ester alcohol or mixtures of alkyl phthalates with 6 to 10 and 8 to 10 C-atoms in the ester alcohol. Particularly suited in the sense of the present invention are thus dibutyl-, dihexyl-, di-2-ethylhexyl-, di-n-octyl-, di-iso-octyl-, di-iso-nonyl-, di-iso-decyl-, di-iso-tridecyl- and benzylbutylphthalate, as well as the mentioned mixtures of alkyl phthalates. Further suited as softeners are the esters of aliphatic dicarboxylic acids, in particular the esters of adipinic, azelaic or sebacic acids or mixtures of two or more thereof. Examples of softeners of this type are di-2-ethylhexyladipate, di-isooctyladipate, di-iso-nonyladipate, di-iso-decyladipate, benzylbutyladipate, benzyloctyladipate, di-2-ethylhexylazelate, di-2-ethylhexylsebacate and di-iso-decylsebacate. Preferred in the context of a further embodiment of the present invention are di-2-ethylhexylacetat and di-iso-octyladipate.

Also suitable as softener are trimellitic acid esters such as tri-2-ethylhexyl-trimellithate, tri-iso-tridecyltrimellitate, tri-iso-octyltrimellitate as well as trimellitic acid esters with 6 to 8, 6 to 10, 7 to 9 or 9 to 11 C-atoms in the ester groups or mixtures of two or more of the mentioned compounds.

Further suited softeners are, e.g., polymer softeners, as given in "Kunststoffadditive", R. Gächter/H. Müller, Carl Hanser Verlag, 3rd edition, 1989, chapter 5.9.6, pages 412-415, or "PVC Technology", W.V. Titow, 4th edition, Elsevier Publishers, 1984, pages 165-170. The most common starting materials for the production of polyester softeners are e.g. dicarboxylic acids such as adipinic, phthalic, azelaic or sebacic acids as well as diols such as 1,2-propandiol, 1,3-butandiol, 1,4-butandiol, 1,6-hexandiol, neopentylglycol or diethylenglycol or mixtures of two or more thereof.

Further suited as softeners are chlorinated hydrocarbons (paraffins) or hydrocarbons as described in "Kunststoffadditive", R. Gächter/H. Müller, Carl Hanser Verlag, 3rd edition, 1989, chapter 5.9.14.2, p. 422-425 and chapter 5.9.14.1, p. 422.

A stabilizer composition according to the invention can comprise the described softeners in a quantity of up to around 99.5 wt.-%, in particular up to around 30 wt.-%, up to around 20 wt.-% or up to around 10 wt.%. In the scope of a preferred embodiment of the present invention the lower limit for the described softeners as component of the stabilizer composition according to the invention amounts to around 0.1 wt.-% or more, e.g. around 0.5 wt.%, 1 wt.-%, 2 wt.-% or 5 wt.-%.

In the scope of a further embodiment of the present invention the stabilizer composition according to the invention can comprise anti-oxidants, UV-absorbers or light-screening agents. Suitable anti-oxidants are e.g. described in EP-A 1 046 668 on pages 33 to 35. Suitable UV-absorber and light-screening agents are mentioned there on pages 35 to 36. Reference is here made explicitly to both disclosures, whereby the disclosures are considered as part of the present text.

A stabilizer composition according to the invention can, besides a polymer and a stabilizer composition according to the invention, also comprise further additives which are not soluble in the stabilizer composition according to the invention. Suitable, in principle, are all additives, e.g. those which do not or insubstantially influence the transparency of a polymer composition produced using such a stabilizer composition.

If the stabilizer composition of the present invention does not have to be liquid or if transparency is of minor importance, inorganic stabilizers can be part of a stabilizer composition according to the present invention.

Further suited as additives in the stabilizer compositions according to the invention are thus hydrotalcites, hydrocalumites, zeolites and alkalialumocarbonates. Suitable hydrotalcites, hydrocalumites, zeolites and alkalialumocarbonates are e.g. described in EP-A 1 046 668 on pages 27 to 29, EP-A 256 872 on pages 3, 5 and 7, DE-C 41 06 411 on pages 2 and 3 or DE-C 41 06 404 on pages 2 and 3 or DE-C 198 60 798. Reference is made explicitly to these documents and the disclosure is considered as part of the disclosure of the present text.

Also suited as additives in the stabilizer compositions according to the invention are metal soaps of saturated, unsaturated, straight-chain or branched, aromatic, cycloaliphatic or aliphatic carboxylic acids or hydroxycarboxylic acids with preferably around 2 to around 22 C-atoms.

As metal cations, metal soaps suitable as additives have preferably a monovalent or a divalent cation, particularly suitable are the cations of sodium, potassium, magnesium, calcium or ammonium or amine or mixtures thereof.

Examples of suitable carboxylic acid anions comprise anions of monovalent carboxylic acids such as acetic acid, propionic acid, butyric acid, valeric acid, hexanoic acid, oenanthic acid, octanoic acid, neodecanoic acid, 2-ethylhexanoic acid, pelargonic acid, decanoic acid, undecanoic acid, dodecanoic acid, tridecanoic acid, myristinic acid, palmitic acid, lauric acid, isostearic acid, stearic acid, 12-hydroxystearic acid, 9,10-dihydroxystearic acid, oleic acid, 3,6-dioxaheptanoic acid, 3,6,9-trioxadecanoic acid, behenic acid, benzoic acid, p-tert-butylbenzoic acid, di-methylhydroxybenzoic acid, 3,5-di-tert-butyl-4-hydroxybenzoic acid, toluic acid, dimethyl-benzoic acid, ethylbenzoic acid, n-propylbenzoic acid, salicylic acid, p-tert-octylsalicylic acid, sorbinic acid, anions of divalent carboxylic acids or respectively monoesters thereof such as oxalic acid, malonic acid, maleic acid, tartaric acid, cinnamic acid, amygdalic acid, malic acid, glycolic acid, oxalic acid, salicylic acid, polyglycoldicarboxylic acids with a degre of polymerisation of around 10 to around 12, phthalic acid, isophthalic acid, terephthalic acid or hydroxyphthalic acid, anions of tri- or tetravalent carboxylic acid or respectively mono-, di- or triesters thereof such as in hemimellitic acid, trimellitic acid, pyromellitic acid or citric acid as well as so-called overbasic carboxylates as e.g. described in DE-A 41 06 404 or DE-A 40 02 988, whereby the disclosure of the last-mentioned documents is considered as part of the disclosure of the present text. Also phenol or alkylphenols ( eg. Nonylphenate)can be used as salts.

In the scope of a preferred embodiment of the present invention preferably metal soaps are used, whose anions are derived from saturated or unsaturated or aromatic carboxylic acids or hydroxycarboxylic acids with around 6 or 8 to around 20 C-atoms. Particularly preferred are thus stearates, oleates, laurates, palmitates, behenates, versatates, hydroxystearates, dihydroxystearates, p-tert-butylbenzoates or 2-ethyl hexanoates of magnesium, calcium or mixtures of two or more thereof. In the scope of a further preferred embodiment of the present invention a polymer composition according to the invention comprises calcium neodecanoate, or magnesium benzoate or sodium benzoate or potassium benzoate or magnesium 2-ethyl hexanoate or mixtures thereof.

A stabilizer composition according to the invention can comprise the mentioned metal soaps or a mixture of two or more thereof in a quantity of up to around 5 wt.-%, e.g., in a quantity of about 0 to about 3 wt.-% or about 0,5 to about 2 wt.%.

A stabilizer composition according to the invention can furthermore comprise impact resistance modifiers and processing aids, gelling agents, antistatic agents, biocides, metal deactivators, optical brighteners, flame retardant agents as well as anti-fogging compounds. Suitable compounds of this class of compounds are e.g. in "Kunststoff Additive ", R. Gächter/H. Müller, Carl Hanser Verlag, 3rd edition, 1989 as well as in the "Handbook of PVC Formulating", E.J. Wilson, J. Wiley & Sons, 1993.

The preparation of a stabilizer composition according to the present invention usually follows standard procedures known to the skilled person.

The present invention thus relates to a process for the production of a stabilizer composition for the stabilisation of halogen containing polymers, characterized in that a mixture of two or more organic phosphite esters of the general formula I 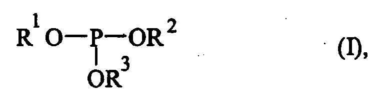 wherein R¹, R² and R³, independently from each other stand for a linear or branched, saturated or unsaturated C₁₋₂₂ alkyl or alkenyl group, a C₄₋₂₂ cycloalkyl or cycloalkenyl group, a C₆₋₂₂ aryl or aralkyl group, an ether group of the general formula II 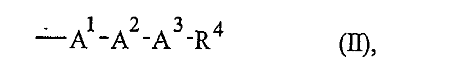 wherein A¹, A² and A³ independently from each other stand for identical or pair wise different or triple different linear or branched, saturated or unsaturated C₂₋₁₈ oxyalkylene groups or C₂₋₁₈ polyoxyalkylene groups and R⁴ stands for a linear or branched, saturated or unsaturated C₁₋₂₂ alkyl or alkenyl group, a C₄₋₂₂ cycloalkyl or cycloalkenyl group, a C₆₋₂₂ aryl or aralkyl or alkaryl group, and wherein at least one organic phosphite ester contains at least one ether group of the general formula II and at least one aralkyl group, is mixed with at least one additive selected from the group consisting of inorganic or organic salts of a halogen containing oxy acid, solvents, acid scavengers, metal soaps, mono alcohols, poly alcohols or amines, wherein the composition comprises an inorganic or organic salt of a halogen containing oxy acid and is free of heavy metals.

The present invention also relates to a polymer composition comprising at least one halogen-containing organic polymer and a stabilizer composition according to the invention.

Examples of halogen-containing polymers of this type are polymers of vinyl chlorides, vinyl resins which comprise vinyl chloride units in the polymer backbone, copolymers of vinyl chloride and vinyl esters of aliphatic acids, in particular vinyl acetate, copolymers of vinyl chloride with esters of acrylic and methacrylic acid or acrylonitrile or mixtures of two or more thereof, copolymers of vinyl chloride with diene compounds or unsaturated dicarboxylic acids or anhydrides thereof, e.g. copolymers of vinyl chloride with diethylmaleate, diethylfumarate or maleic acid anhydride, post-chlorinated polymers and copolymers of vinyl chloride, copolymers of vinyl chloride and vinylidene chloride with unsaturated aldehydes, ketones and other compounds such as acrolein, crotonaldehyde, vinylmethylketone, vinylmethylether, vinylisobutylether and the like, polymers and copolymers of vinylidene chloride with vinylchloride and other polymerisable compounds, as already mentioned above, polymers of vinyl chloroacetate and dichlorodivinyl ether, chlorinated polymers of vinylacetate, chlorinated polymer esters of acrylic acid and α-substituted acrylic acids, chlorinated polystyrenes, for example polydichlorostyrene, chlorinated polymers of ethylene, polymers and post-chlorinated polymers of chlorobutadiene and their copolymers with vinylchloride as well as mixtures of two or more of the mentioned polymers of polymer mixtures, which comprise one or more of the above-mentioned polymers.

Likewise suitable for stabilizing with the stabilizer compositions according to the invention are the graft polymers of PVC with EVA, ABS or MBS. Preferred substrates for graft copolymers of this type are additionally the previously mentioned homo- and copolymers, in particular mixtures of vinyl chloride homo polymers with other thermoplastic or elastomeric polymers, in particular blends with ABS, MBS, NBR, SAN, EVA, CPE, MBAS, PAA (polyalkylacrylate), PAMA (polyalkylmethacrylate), EPDM, polyamides or polylactones.

Also suited to stabilizing with the stabilizer compositions according to the invention are mixtures of halogenated and non-halogenated polymers, e.g. mixtures of the above-mentioned non-halogenated polymers with PVC, in particular mixtures of polyurethanes and PVC.

Furthermore, recyclates of chlorine-containing polymers can be stabilized with the stabilizer composition according to the invention, whereby in principle all recyclates of the above-mentioned, halogenated polymers are suitable therefor. In the scope of the present invention, e.g. PVC-recyclate is suitable.

In the scope of a preferred embodiment of the present invention, a polymer composition according to the invention comprises the stabilizer composition according to the invention in a quantity of 0,1 to 10 phr, in particular around 0,2 to around 8 phr or around 0,5 to around 5 phr. The unit phr stands for "per hundred resin" and thus relates to parts by weight per 100 parts by weight of polymer. Preferably, a polymer composition according to the invention comprises as halogenated polymer at least partially PVC, whereby the PVC fraction amounts in particular to at least around 20, preferably at least around 50 wt.-%, e.g. at least around 80 or at least around 90 wt.-%.

The present invention also relates to a process for stabilizing halogen-containing polymers, in which a halogen-containing polymer or a mixture of two or more halogen-containing polymers or a mixture of one or more halogen-containing polymer and one or more halogen-free polymers is mixed with a stabilizer composition according to the invention.

The mixing of polymer or polymers and the stabilizer composition according to the invention can in principle occur at any time before or during the processing of the polymer. Thus the stabilizer composition can e.g. be mixed into the polymer which is present in powder or granulate form before processing. It is, however, likewise possible to add the stabilizer composition to the polymer or to the polymers in softened or melted state, e.g. during processing in an extruder.

A polymer composition according to the invention can be brought in known ways into a desired form. Suitable processes are e.g. calendering, extruding, injection molding, sintering, extrusion-blowing or the plastisol-process. A polymer composition according to the invention can, e.g., also be used in the production of foam materials. In principle the polymer composition according to the invention is suited to the production of hard or in particular soft PVC.

A polymer composition according to the invention can be processed into formed bodies. The subject matter of the present invention is therefore also formed bodies, at least comprising a stabilizer composition according to the invention or a polymer composition according to the invention.

The term "formed bodies" comprises, in the scope of the present invention, in principle all three dimensional structures which can be produced from a polymer composition according to the invention. The term "formed body" comprises, in the scope of the present invention, e.g., wire sheathing, automobile components, e.g., automobile components as are used in the interior of the automobile, in the motor space or at the outer areas, cable isolations, decoration films, agrofoil, tubes, sealing profiles, office films, hollow bodies (bottles), packing films (dep-drawing films), blow films, pipes, foam materials, heavy-duty profiles (window frames), light sheet profiles, building profiles, sidings, fittings, plates, foam plates, coextrudates with recycled core or housing for electrical apparatus or machines, e.g., computers or household appliances. Further examples of formed bodies producible from a polymer composition according to the invention are artificial leather, floor coverings, textile coatings, wall papers, coil-coatings, toys (eg.balls, dolls), gloves or underfloor protection for motor vehicles.

The subject matter of the present invention is also the use of a mixture of two or more organic phosphite ester of the general formula I 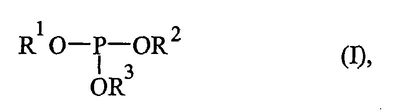 wherein R¹, R² and R³, independently from each other stand for a linear or branched, saturated or unsaturated C₁₋₂₂ alkyl or alkenyl group, a C₄₋₂₂ cycloalkyl or cycloalkenyl group, a C₆₋₂₂ aryl or aralkyl group, an ether group of the general formula II 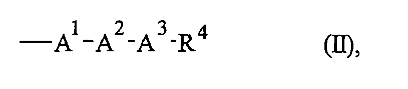 wherein A¹, A² and A³ independently from each other stand for identical or pair wise different or triple different linear or branched, saturated or unsaturated C₂₋₁₈ oxyalkylene groups or C₂₋₁₈ polyoxyalkylene groups and R⁴ stands for a linear or branched, saturated or unsaturated C₁₋₂₂ alkyl or alkenyl group, a C₄₋₂₂ cycloalkyl or cycloalkenyl group, a C₆₋₂₂ aryl or aralkyl or alkaryl group, and wherein at least one organic phosphite ester contains at least one ether group of the general formula II and at least one aralkyl group for the stabilization of halogen containing polymers, wherein the mixture comprises an inorganic or organic salt of a halogen containing oxy acid and is free of heavy metals.

The invention is in the following more closely illustrated by means of examples.

### Examples:

The following examples illustrate the superior stabilisation qualities of the stabilizer compositions according to the present invention. The comparison is made with regard to standard Cₐ/Zₙ-stabilizers.

The following stabilizer compositions were prepared:

| Ex. | Mix 1 | Mix 2 | Poly phosphite | C12-C16 Alkylalcohols | Polyalkyl benzene | Butyl diglycol | Ca-neodecanoate |
|---|---|---|---|---|---|---|---|
| | | | | (CAS 68855-56-1) | (CAS 85117-41-5) | (CAS 112-34-5) | (CAS 27253-33-4) |
| 1 | 45,0 | | 45,0 | | 1,7 | 4,5 | 2,0 |
| 2 | 45,0 | | 45,0 | 1,1 | | 4,5 | |
| 3 | | 44,5 | 44,5 | 7,0 | | 0,4 | |
| 4 | | 45,0 | 45,0 | 7,0 | | 0,4 | |

| Ex. | Mg Benzoate | Mg-ethyl Hexanoate | NaClO₄ (70% sol, in water) | Triethanolamine Perchlorate solution in triethanolamine | Benzene propanoic acid, 3,5-bis (1,1-dimethyl-ethyl) -4-hydroxy-, octadecylester (CAS 2082-79-3) | Uvitex OB (CAS 7128-64-5) |
|---|---|---|---|---|---|---|
| | (CAS 553-70-8) | (CAS 15602-15-0) | | | | |
| 1 | | | 1,8 | | | |
| 2 | 0,5 | 2,0 | 1,8 | | | 0,1 |
| 3 | 0,5 | 2,0 | | 6.0 | 1,0 | 0,1 |
| 4 | 0,5 | 2,0 | | 6.0 | | 0,1 |

| | | | | | | |
|---|---|---|---|---|---|---|
| Mix 1: 2,2-butoxy-ethoxy ethyl and nonylphenol esters (CAS 92908-31-1) Mix 2: Phosphorous acid, mixed C13-C15 alkyl and nonylphenyl triesters (CAS 92257-34-6) Polyphosphite: Didecyl pentaerythritol diphosphite (CAS 26544-27-4) | | | | | | |

The above described stabilizer compositions were introduced into the following formulation:

| | |
|---|---|
| Microsuspension PVC K70 | 75 |
| Extender PVC K value 66 | 25 |
| DOP | 40 |
| Ti02 | 1 |
| ESBO | 3 |
| Stabiliser as described above 2 | |

The following results were obtained:
Static heat stability at 200°C, transparent formulation (Mathis oven), yellow index /time [min]

| Time [min] | Ex. 3 | Ex. 4 | Ca/Zn standard |
|---|---|---|---|
| 0 | 7.2 | 6.7 | 7 |
| 1 | 5.8 | 5.4 | 6 |
| 2 | 5.9 | 7.1 | 6 |
| 3 | 6.7 | 7.5 | 5.8 |
| 4 | 6.0 | 5.8 | 6.1 |
| 5 | 6.7 | 8.0 | 5.8 |
| 6 | 8.6 | 10.5 | 8.3 |
| 7 | 10.9 | 12.0 | 15.8 |
| 8 | 14.1 | 18.6 | 28 |
| 9 | 19.1 | 20.8 | 46.6 |

Heat aging at 70° in oven: yellow index

| Time [weeks] | Ex. 1 | Ex.2 | Ca/Zn-standard |
|---|---|---|---|
| 0 | 4.7 | 4.0 | 6.9 |
| 1 | 10.4 | 9.3 | 11.6 |
| 2 | 15.3 | 14.2 | 16.8 |
| 3 | 18.0 | 17.1 | 20.4 |
| 4 | 20.0 | 19.8 | 23.8 |

## Claims

1. Stabilizer composition, **characterised in that** it comprises at least one or more different types of organic phosphite esters of the general formula I 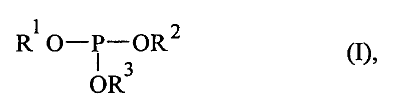 wherein R¹, R² and R³, independently from each other stand for a linear or branched, saturated or unsaturated C₁₋₂₂ alkyl or alkenyl group, a C₄₋₂₂ cycloalkyl or cycloalkenyl group, a C₆₋₂₂ aryl or aralkyl group, an ether group of the general formula II
-A¹-A²-A³-R⁴ (II),
wherein A¹, A² and A³ independently from each other stand for identical or pair wise different or triple different linear or branched, saturated or unsaturated C₂₋₁₈ oxyalkylene groups or C₂₋₁₈ polyoxyalkylene groups and R⁴ stands for a linear or branched, saturated or unsaturated C₁₋₂₂ alkyl or alkenyl group, a C₄₋₂₂ cycloalkyl or cycloalkenyl group, a C₆₋₂₂ aryl or aralkyl or alkaryl group, and wherein at least one organic phosphite ester contains at least one ether group of the general formula II and at least one aralkyl group, wherein the composition comprises an inorganic or organic salt of a halogen containing oxy acid and is free of heavy metals.

2. Stabilizer composition according to claim 1, **characterized in that** the molecular weight of the ether group according to formula II is less than 1000.

3. Stabilizer composition according to one of the claims 1 or 2, **characterized in that** it contains less than 80 % by weight of phosphite esters with 3 or more aryl or aralkyl groups or a mixture of both.

4. Stabilizer composition according to one of the claims 1 to 3, **characterized in that** it contains at least two phosphite esters according to the general formula I which differ in at least one of the radicals R¹, R² or R³, wherein both phosphites contain at least one aryl or aralkyl radical.

5. Stabilizer composition according to one of the claims 1 to 4, **characterized in that** it contains phosphite esters according to the general formula I in an amount of at least 30 % by weight.

6. Stabilizer composition according to one of the claims 1 to 6, **characterized in that** it contains one or more additives.

7. Stabilizer composition according to one of the claims 1 to 6, **characterized in that** it contains an additive selected from the group consisting of inorganic or organic salts of a halogen containing oxy acid, solvents, acid scavengers, fillers, metal soaps, mono alcohols, poly alcohols or amines or a mixture of two or more of described compounds.

8. Process for the production of a stabilizer composition for the stabilisation of halogen containing polymers, **characterized in that** a mixture of two or more organic phosphite ester of the general formula I 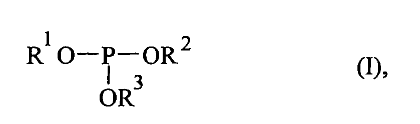 wherein R¹, R² and R³, independently from each other stand for a linear or branched, saturated or unsaturated C₁₋₂₂ alkyl or alkenyl group, a C₄₋₂₂ cycloalkyl or cycloalkenyl group, a C₆₋₂₂ aryl or aralkyl group, an ether group of the general formula II
-A¹-A²-A³-R⁴ (II),
wherein A¹, A² and A³ independently from each other stand for identical or pair wise different or triple different linear or branched, saturated or unsaturated C₂₋₁₈ oxyalkylene groups or C₂₋₁₈ polyoxyalkylene groups and R⁴ stands for a linear or branched, saturated or unsaturated C₁₋₂₂ alkyl or alkenyl group, a C₄₋₂₂ cycloalkyl or cycloalkenyl group, a C₆₋₂₂ aryl or aralkyl or alkaryl group, and wherein at least one organic phosphite ester contains at least one ether group of the general formula II and at least one aralkyl group is contacted with at least one additive selected from the group consisting of inorganic or organic salts of a halogen containing oxy acid, solvents, acid scavengers, metal soaps, mono alcohols, poly alcohols or amines, wherein the composition comprises an inorganic or organic salt of a halogen containing oxy acid and is free of heavy metals.

9. Use of a mixture of two or more organic phosphite ester of the general formula I 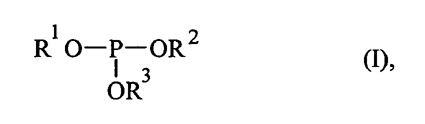 wherein R¹, R² and R³, independently from each other stand for a linear or branched, saturated or unsaturated C₁₋₂₂ alkyl or alkenyl group, a C₄₋₂₂ cycloalkyl or cycloalkenyl group, a C₆₋₂₂ aryl or aralkyl group, an ether group of the general formula II
-A¹-A²-A³-R⁴ (II),
wherein A¹, A² and A³ independently from each other stand for identical or pair wise different or triple different linear or branched, saturated or unsaturated C₂₋₁₈ oxyalkylene groups or C₂₋₁₈ polyoxyalkylene groups and R⁴ stands for a linear or branched, saturated or unsaturated C₁₋₂₂ alkyl or alkenyl group, a C₄₋₂₂ cycloalkyl or cycloalkenyl group, a C₆₋₂₂ aryl or aralkyl or alkaryl group, and wherein at least one organic phosphite ester contains at least one ether group of the general formula II and at least one aralkyl group for the stabilization of halogen containing polymers, wherein the mixture comprises an inorganic or organic salt of a halogen containing oxy acid and is free of heavy metals.

10. Polymer composition containing a halogen containing polymer and a stabilizer composition according to one of the claims 1 to 7 or a stabilizer composition prepared according to claim 8.

11. Process for stabilizing halogen-containing polymers, in which a halogen-containing polymer or a mixture of two or more halogen-containing polymers or a mixture of one or more halogen-containing polymer and one or more halogen-free polymers is mixed with a stabilizer composition according to one of the claims 1 to 7 for a stabilizer composition prepared according to claim 8.

## Patentansprüche

1. Stabilisatorzusammensetzung, **dadurch gekennzeichnet, dass** sie wenigstens einen oder mehrere verschiedene Typen von organischen Phosphitestern der allgemeinen Formel I umfasst, 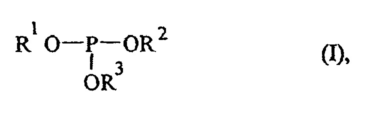 wobei R¹, R² und R³ unabhängig voneinander für einen linearen oder verzweigten, gesättigten oder nichtgesättigten C₁₋₂₂-Alkyl- oder Alkenylrest, einen C₄₋₂₂-Cycloalkyl- oder Cycloalkenylrest, einen C₆₋₂₂-Aryl- oder Aralkylrest, einen Etherrest der allgemeinen Formel II stehen,
-A¹-A²-A³-R ⁴ (II),
wobei A¹, A² und A³ unabhängig voneinander für gleiche oder paarweise verschiedene oder dreifach verschiedene lineare oder verzweigte, gesättigte oder nichtgesättigte C₂₋₁₈-Oxyalkylenreste oder C₂₋₁₈-Polyoxyalkylenreste stehen und R⁴ für einen linearen oder verzweigten, gesättigten oder nichtgesättigten C₁₋₂₂-Alkyl- oder Alkenylrest, einen C₄₋₂₂-Cycloalkyl- oder Cycloalkenylrest, einen C₆₋₂₂-Aryl- oder Aralkyl- oder Alkarylrest steht, und wobei wenigstens ein organischer Phosphitester wenigstens einen Etherrest der allgemeinen Formel II und wenigstens einen Aralkylrest enthält, wobei die Zusammensetzung ein anorganisches oder organisches Salz einer Halogen-enthaltenden Oxysäure umfasst und frei von Schwermetallen ist.

2. Stabilisatorzusammensetzung gemäß Anspruch 1, **dadurch gekennzeichnet, dass** das Molekulargewicht des Etherrests gemäß Formel II weniger als 1000 beträgt.

3. Stabilisatorzusammensetzung gemäß einem der Ansprüche 1 oder 2, **dadurch gekennzeichnet, dass** sie weniger als 80 Gew.-% an Phosphitestern mit 3 oder mehr Aryl- oder Aralkylresten oder einem Gemisch der beiden enthält.

4. Stabilisatorzusammensetzung gemäß einem der Ansprüche 1 bis 3, **dadurch gekennzeichnet, dass** sie wenigstens zwei Phosphitester gemäß der allgemeinen Formel 1 enthält, die sich in wenigstens einem der Reste R¹, R² oder R³ unterscheiden, wobei beide Phosphite wenigstens einen Aryl- oder Aralkylrest enthalten.

5. Stabilisatorzusammensetzung gemäß einem der Ansprüche 1 bis 4, **dadurch gekennzeichnet, dass** sie Phosphitester gemäß der allgemeinen Formel I in einer Menge von wenigstens 30 Gew.-% enthält.

6. Stabilisatorzusammensetzung gemäß einem der Ansprüche 1 bis 5, **dadurch gekennzeichnet, dass** sie einen oder mehrere Zusatzstoffe enthält.

7. Stabilisatorzusammensetzung gemäß einem der Ansprüche 1 bis 6, **dadurch gekennzeichnet, dass** sie einen Zusatzstoff enthält, ausgewählt aus der Gruppe, bestehend aus anorganischen oder organischen Salzen einer Halogen-enthaltenden Oxysäure, Lösungsmitteln, Säurefängern, Füllstoffen, Metallseifen, Monoalkoholen, Polyalkoholen oder Aminen, oder ein Gemisch von zwei oder mehr der genannten Verbindungen.

8. Verfahren zum Herstellen einer Stabilisatorzusammensetzung für die Stabilisierung von Halogen-enthaltenden Polymeren, **dadurch gekennzeichnet, dass** ein Gemisch von zwei oder mehr organischen Phosphitestern der allgemeinen Formel I, 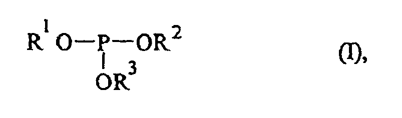 wobei R¹, R² und R³ unabhängig voneinander für einen linearen oder verzweigten, gesättigten oder nichtgesättigten C₁₋₂₂-Alkyl- oder Alkenylrest, einen C₄₋₂₂-Cycloalkyl- oder Cycloalkenylrest, einen C₆₋₂₂-Aryl- oder Aralkylrest, einen Etherrest der allgemeinen Formel II stehen,
-A¹-A²-A³-A⁴ (II),
wobei A¹, A² und A³ unabhängig voneinander für gleiche oder paarweise verschiedene oder dreifach verschiedene lineare oder verzweigte, gesättigte oder nichtgesättigte C₂₋₁₈-Oxyalkylenreste oder C₂₋₁₈-Polyoxyalkylenreste stehen und R⁴ für einen linearen oder verzweigten, gesättigten oder nichtgesättigten C₁₋₂₂-Alkyl- oder Alkenylrest, einen C₄₋₂₂-Cycloalkyl- oder Cycloalkenylrest, einen C₆₋₂₂-Aryl- oder Aralkyl- oder Alkarylrest steht, und wobei wenigstens ein organischer Phosphitester wenigstens einen Etherrest der allgemeinen Formel II und wenigstens einen Aralkylrest enthält, mit wenigstens einem Zusatzstoff kontaktiert wird, ausgewählt aus der Gruppe, bestehend aus anorganischen oder organischen Salzen einer Halogen-enthaltenden Oxysäure, Lösungsmitteln, Säurefängern, Metallseifen, Monoalkoholen, Polyalkoholen oder Aminen, wobei die Zusammensetzung ein anorganisches oder organisches Salz einer Halogen-enthaltenden Oxysäure umfasst und frei von Schwermetallen ist.

9. Verwendung eines Gemischs von zwei oder mehr organischen Phosphitestern der allgemeinen Formel I, 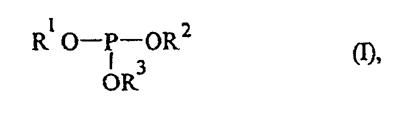 wobei R¹, R² und R³ unabhängig voneinander für einen linearen oder verzweigten, gesättigten oder nichtgesättigten C₁₋₂₂-Alkyl- oder Alkenylrest, einen C₄₋₂₂-Cycloalkyl- oder Cycloalkenylrest, einen C₆₋₂₂-Aryl- oder Aralkylrest, einen Etherrest der allgemeinen Formel II stehen,
-A¹-A²-A³-R⁴ (II),
wobei A¹, A² und A³ unabhängig voneinander für gleiche oder paarweise verschiedene oder dreifach verschiedene lineare oder verzweigte, gesättigte oder nichtgesättigte C₂₋₁₈-Oxyalkylenreste oder C₂₋₁₈-Polyoxyalkylenreste stehen und R⁴ für einen linearen oder verzweigten, gesättigten oder nichtgesättigten C₁₋₂₂-Alkyl- oder Alkenylrest, einen C₄₋₂₂-Cycloalkyl- oder Cycloalkenylrest, einen C₆₋₂₂-Aryl- oder Aralkyl- oder Alkarylrest steht, und wobei wenigstens ein organischer Phosphitester wenigstens einen Etherrest der allgemeinen Formel II und wenigstens einen Aralkylrest enthält, für die Stabilisierung von Halogen-enthaltenden Polymeren, wobei das Gemisch ein anorganisches oder organisches Salz einer Halogen-enthaltenden Oxysäure umfasst und frei von Schwermetallen ist.

10. Polymerzusammensetzung, umfassend ein Halogen-enthaltendes Polymer und eine Stabilisatorzusammensetzung gemäß einem der Ansprüche 1 bis 7 oder eine gemäß Anspruch 8 hergestellte Stabilisatorzusammensetzung.

11. Verfahren zum Stabilisieren von Halogen-enthaltenden Polymeren, wobei ein Halogen-enthaltendes Polymer oder ein Gemisch von zwei oder mehr Halogen-enthaltenden Polymeren oder ein Gemisch von einem oder mehreren Halogen-enthaltenden Polymeren und einem oder mehreren Halogen-freien Polymeren mit einer Stabilisatorzusammensetzung gemäß einem der Ansprüche 1 bis 7 oder einer gemäß Anspruch 8 hergestellten Stabilisatorzusammensetzung gemischt wird.

## Revendications

1. Composition de stabilisant, **caractérisée en ce qu'**elle comprend au moins un ou plusieurs types d'esters phosphites organiques représentés par la formule générale I 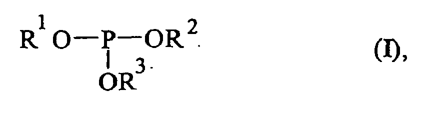 dans laquelle R¹, R² et R³, indépendamment les uns des autres, représentent chacun un groupe alkyle ou alcényle en C₁₋₂₂ linéaire ou ramifié, saturé ou insaturé, un groupe cycloalkyle ou cycloalcényle en C₄₋₂₂, un groupe aryle ou aralkyle en C₆₋₂₂, un groupe éther représenté par la formule générale II
-A¹-A²-A³-R⁴ (II),
dans laquelle A¹, A² et A³ représentent indépendamment les uns des autres des groupes oxyalkylènes en C₂₋₁₈ ou des groupes polyoxyalkylènes en C₂₋₁₈ linéaires ou ramifiés, saturés ou insaturés, identiques ou différents par paires ou triplement différents, et R⁴ représente un groupe alkyle ou alcényle en C₁₋₂₂ linéaire ou ramifié, saturé ou insaturé, un groupe cycloalkyle ou cycloalcényle en C₄₋₂₂, un groupe aryle ou aralkyle en C₆₋₂₂, et dans laquelle au moins un ester phosphite organique contient au moins un groupe éther représenté par la formule générale II et au moins un groupe aralkyle, la composition comprenant un sel inorganique ou organique d'un oxyacide halogéné et étant exempte de métaux lourds.

2. Composition de stabilisant selon la revendication 1, **caractérisée en ce que** la masse moléculaire du groupe éther répondant à la formule II est inférieure à 1000.

3. Composition de stabilisant selon l'une quelconque des revendications 1 ou 2, **caractérisée en ce qu'**elle contient moins de 80 % en poids d'esters phosphites ayant 3 ou plus de 3 groupes aryles ou aralkyles ou un mélange des deux.

4. Composition de stabilisant selon l'une quelconque des revendications 1 à 3, **caractérisée en ce qu'**elle contient au moins deux esters phosphites répondant à la formule générale I qui diffèrent en ce qui concerne au moins l'un des radicaux R¹, R² ou R³, dans laquelle les deux phosphites contiennent au moins un radical aryle ou aralkyle.

5. Composition de stabilisant selon l'une quelconque des revendications 1 à 4, **caractérisée en ce qu'**elle contient des esters phosphites répondant à la formule générale I à hauteur d'au moins 30 % en poids.

6. Composition de stabilisant selon l'une quelconque des revendications 1 à 5, **caractérisée en ce qu'**elle contient un ou plusieurs additifs.

7. Composition de stabilisant selon l'une quelconque des revendications 1 à 6, **caractérisée en ce qu'**elle contient un additif choisi dans le groupe constitué par les sels inorganiques ou organiques d'un oxyacide halogéné, les solvants, les fixateurs d'acide, les savons métalliques, les monoalcools, les polyols ou les amines ou un mélange de deux ou plus de deux des composés décrits.

8. Procédé pour la production d'une composition de stabilisant pour la stabilisation de polymères halogénés, **caractérisé en ce qu'**un mélange de deux ou plus de deux esters phosphites organiques représentés par la formule générale I 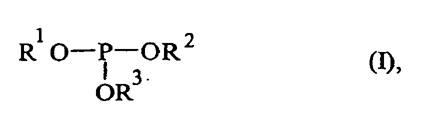 dans laquelle R¹, R² et R³, indépendamment les uns des autres, représentent chacun un groupe alkyle ou alcényle en C₁₋₂₂ linéaire ou ramifié, saturé ou insaturé, un groupe cycloalkyle ou cycloalcényle en C₄₋₂₂, un groupe aryle ou aralkyle en C₆₋₂₂, un groupe éther représenté par la formule générale II
-A¹-A²-A³-R⁴ (II),
dans laquelle A¹, A² et A³ représentent indépendamment les uns des autres des groupes oxyalkylènes en C₂₋₁₈ ou des groupes polyoxyalkylènes en C₂₋₁₈, linéaires ou ramifiés, saturés ou insaturés, identiques ou différents par paire ou triplement différents, et R⁴ représente un groupe alkyle ou alcényle en C₁₋₂₂ linéaire ou ramifié, saturé ou insaturé, un groupe cycloalkyle ou cycloalcényle en C₄₋₂₂, un groupe aryle ou aralkyle en C₆₋₂₂, et dans lequel au moins un ester phosphite organique contient au moins un groupe éther représenté par la formule générale II et au moins un groupe aralkyle, est mis en contact avec au moins un additif choisi dans le groupe constitué par les sels inorganiques ou organiques d'un oxyacide halogéné, les solvants, les fixateurs d'acide, les charges, les savons métalliques, les monoalcools, les polyols ou les amines, dans lequel la composition comprend un sel inorganique ou organique d'un oxyacide halogéné et est exempte de métaux lourds.

9. Utilisation d'un mélange de deux ou plus de deux esters phosphites organiques représentés par la formule générale I 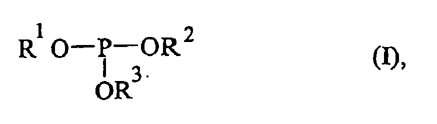 dans laquelle R¹, R² et R³, indépendamment les uns des autres, représentent chacun un groupe alkyle ou alcényle C₁₋₂₂ en linéaire ou ramifié, saturé ou insaturé, un groupe cycloalkyle ou cycloalcényle en C₄₋₂₂, un groupe aryle ou aralkyle en C₆₋₂₂, un groupe éther représenté par la formule générale II
- A¹-A²-A³-R⁴ (II),
dans laquelle A¹, A² et A³ représentent indépendamment les uns des autres des groupes oxyalkylènes en C₂₋₁₈ ou des groupes polyoxyalkylènes en C₂₋₁₈, linéaires ou ramifiés, saturés ou insaturés, identiques ou différents par paire ou triplement différents, et R⁴ représente un groupe alkyle ou alcényle en C₁₋₂₂ linéaire ou ramifié, saturé ou insaturé, un groupe cycloalkyle ou cycloalcényle en C₄₋₂₂, un groupe aryle ou aralkyle en C₆₋₂₂, et dans laquelle au moins un ester phosphite organique contient au moins un groupe éther représenté par la formule générale II et au moins un groupe aralkyle, pour la stabilisation de polymères halogénés, dans laquelle le mélange comprend un sel inorganique ou organique d'un oxyacide halogéné et est exempte de métaux lourds.

10. Composition de polymère contenant un polymère halogéné et une composition de stabilisant selon l'une quelconque des revendications 1 à 7 ou une composition de stabilisant préparée selon la revendication 8.

11. Procédé pour la stabilisation de polymères halogénés, dans lequel un polymère halogéné ou un mélange de deux ou plus de deux polymères halogénés ou un mélange d'un ou plusieurs polymères halogénés et d'un ou plusieurs polymères sans halogène est mélangé avec une composition de stabilisant selon l'une quelconque des revendications 1 à 7 ou une composition de stabilisant préparée selon la revendication 8.
